# EUROPEAN PATENT APPLICATION

(11) **EP 4 732 957 A1**
(43) Date of publication of application: **29.04.2026**
(21) Application number: 25768634.5
(22) Date of filing: 06.03.2025
(51) Int. Cl.: B04C 3/04, B04C 9/00, B04B 5/10, B04B 11/06, B04B 15/08, B04B 7/02, H01M 4/04

(54) **ELECTRODE TAB SCRAP COLLECTING APPARATUS AND ELECTRODE TAB SCRAP COLLECTING METHOD USING SAME**

(30) Priority: 06.03.2024 KR 20240032201
(71) Applicant: LG Energy Solution, Ltd., Seoul 07335 (KR)
(72) Inventor: KIM, Ik Joon, Daejeon 34122 (KR); PARK, Kyu Don, Daejeon 34122 (KR)
(74) Representative: Goddar, Heinz J.
(86) International application number: PCT/KR2025/002951
(87) International publication number: WO 2025/188078

(57) **Abstract**

An electrode tab scrap collection device related to one example of the present invention comprises a negative pressure pump arranged to suck by generating a negative pressure, a separation part including an inflow port arranged so that scraps are introduced from the outside, and a discharge port arranged so that the introduced scraps are discharged, a suction pipe connected to the negative pressure pump, having a suction port arranged to suck air, and inserted into the separation part, a cover part connected to the lower portion of the separation part and being in communication with the discharge port, a collection container arranged to store the scraps and arranged to be combinable to or separable from the cover part, and a mounting lever arranged so that the collection container is combined to or separated from the cover part.

## Description

### Technical Field

The present invention relates to an electrode tab scrap collection device and an electrode tab scrap collection method using the same, and more specifically, relates to a device capable of efficiently performing a process of collecting electrode tab scraps.

This application claims the benefit of priority based on Korean Patent Application No. 10-2024-0032201 dated March 6, 2024, the disclosure of which is incorporated herein by reference in its entirety.

### Background Art

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

Such a secondary battery comprises an electrode assembly in which electrodes and separation parts are alternately laminated, and a case accommodating the electrode assembly, where the electrode assembly has a structure in which multiple electrodes and multiple separation parts are alternately laminated.

Then, the secondary battery comprises an electrode manufacturing process for manufacturing electrodes, an electrode assembly assembling process for assembling an electrode assembly by laminating the manufactured electrodes and separation parts, and a process for manufacturing a secondary battery by accommodating the manufactured electrode assembly in a case.

Also, the secondary battery is composed of a positive electrode, a negative electrode, a separation part, an electrolyte, and the like, and the positive electrode and the negative electrode are each connected to an external circuit through a metal component called an electrode tab. The electrode tab can be attached to the surface of the electrode using an adhesive, or can be formed by being formed integrally with the electrode. The electrode tab can be connected to an electrode lead protruding out of the secondary battery cell.

In addition, the manufacturing process of the electrode tab is as follows. First, the electrode is punched and cut using a slitter according to the specifications of the cell. At this time, the electrode tab can be formed at the edge portion of the electrode through punching, or a separate electrode tab can be attached. Furthermore, a separate cutter can be provided for processing the shape of the electrode tab.

Furthermore, defective scraps generated in this punching process and scraps remaining after cutting can cause environmental pollution and safety accidents. Therefore, it is necessary that the scraps are collected and discharged quickly and accurately.

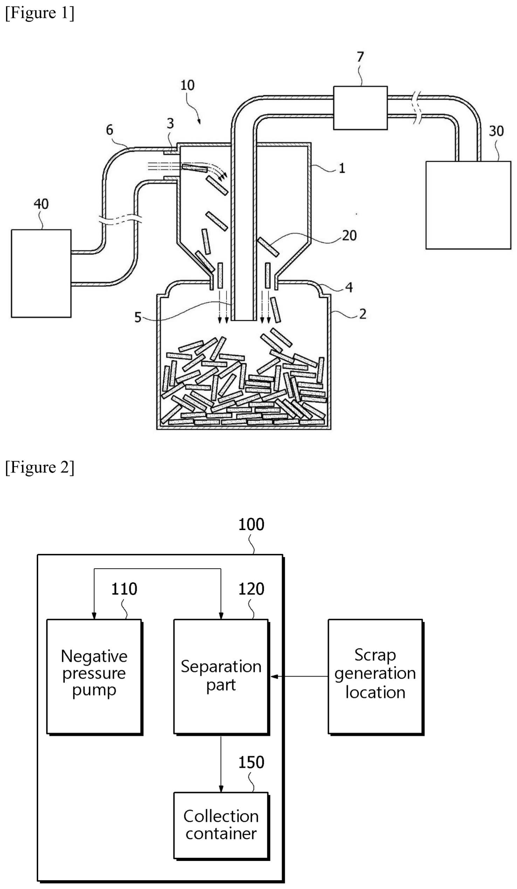

Figure 1 is a partial cross-sectional diagram schematically showing an inner appearance of a general scrap collection device (10).

Referring to Figure 1, a conventional electrode tab scrap collection device (10) is composed of a combination of a cyclone (1) and a collection container (2). The cyclone (1) had a suction pipe (5) inserted, which was connected to a negative pressure pump (7), and thus was arranged so that scraps (20) were introduced through an inlet pipe (3) from a scrap generation site (40) through a hose (6) by suction air of the suction pipe (5). The scraps (20) thus introduced can be rotated together with the air to separate the scraps (20) from the airflow by the difference between gravity and centrifugal force. The cyclone (1) ca discharge the separated scraps (20) into the collection container (2) connected through a discharge port at the bottom of the cyclone (1) while the scraps fall due to gravity. At this time, the collection container (2) is sealed at the top by a cover part (4) connected to the bottom of the cyclone (1). In addition, the electrode tab scrap collection device (10) is connected to a dust collector (30). Here, the dust collector (30) is a device for collecting dust in the sucked air.

Such devices perform a role of collecting and discharging scraps (20), but have the following problems.

If the scraps discharged from the cyclone are separated into the collection container, the scraps accumulate therein and thus the collection container becomes full, the conventional scrap collection device repeats a process of separating the collection container from the cyclone, discharging the collected scraps from the collection container to an external disposal site or recycling site, and combining the emptied collection container with the cyclone again.

However, the conventional scrap collection devices have the following problems occurring in the process of separating the collection container from the cyclone, and mounting it thereon again.

First, there is a problem that the efficiency of the separation and combination work is reduced because the separation and combination work of the collection container and the cyclone is not easy for a worker. For example, when temporary combined members such as bolts or nuts are used in a connection part between the collection container and the cyclone, the worker needs a lot of time and effort for disassembling and assembling these combined members. In addition, when the connection part between the collection container and the cyclone is unstable or defective because the collection container is not fully inserted, air leakage occurs between the collection container and the cyclone, whereby there may be a phenomenon in which the scrap suction power is reduced or the scraps flow backward.

In addition, the scrap collection device is linked with other devices such as an electrode tab cutter to collect scraps, so that when the worker does not quickly perform the separation and combination work of the collection container, the operation of the cutter must also stop or slow down. This may negatively affect the work efficiency and productivity of other devices as well as the scrap collection device.

Therefore, the separation and combination work of the collection container and the cyclone is simple and stable compared to the conventional scrap collection device, so that there is a need for a scrap collection device capable of efficiently performing the separation and combination work of the collection container.

### Disclosure

### Technical Problem

The present invention is intended to solve problems occurring in a process of discharging and collecting scraps generated upon conventional electrode manufacturing.

Through one example of the present invention, by comprising a mounting lever arranged so that a collection container is combined to or separated from a cover part, it is intended to provide an electrode tab scrap collection device and an electrode tab scrap collection method, which enable a worker to easily and quickly perform a separation and combination work of the cover part and the collection container.

In addition, it is intended to provide an electrode tab scrap collection device and an electrode tab scrap collection method, capable of improving electrode tab scrap collection efficiencies and productivity.

### Technical Solution

In order to achieve the above-described purpose, according to one example of the present invention, it provides a device for collecting scraps generated in a process of manufacturing electrode tabs, wherein the electrode tab scrap collection device comprises a separation part including a discharge port arranged so that scraps are introduced from the outside into the inside and the introduced scraps are discharged, a cover part connected to the lower portion of the separation part and being in communication with the discharge port, a collection container arranged to store the scraps and arranged to be combinable to or separable from the cover part, and an mounting lever arranged so that the collection container is combined to or separated from the cover part.

In addition, the electrode tab scrap collection device related to one example of the present invention comprises a negative pressure pump arranged to suck by generating a negative pressure, a separation part including an inflow port arranged so that the scraps are introduced from the outside, and a discharge port arranged so that the introduced scraps are discharged, a suction pipe connected to the negative pressure pump, having a suction port arranged to suck air, and inserted into the separation part, a cover part connected to the lower portion of the separation part and being in communication with the discharge port, a collection container arranged to store the scraps and arranged to be combinable to or separable from the cover part, and a mounting lever arranged so that the collection container is combined to or separated from the cover part.

As one example, the mounting lever may comprise a handle part having an elongated bar shape, and a first lever part and a second lever part elongated in a bar shape from each of both ends of the handle part toward the collection container. In addition, the mounting lever may comprise a handle part having a bar shape elongated in both directions, and a first lever part and a second lever part elongated in a bar shape from each end of the handle part toward the collection container.

The collection container may be provided with a first hanging protrusion and a second hanging protrusion, arranged to protrude in both directions from both laterals so that the protrusions are combinable to the first lever part and the second lever part, respectively.

Also, the first lever part and the second lever part may have a first insertion groove and a second insertion groove, respectively, arranged so that each of the first hanging protrusion and the second hanging protrusion is inserted therein.

In addition, the electrode tab scrap collection device may comprise a frame arranged to fix the separation part, and a first mounting guide member and a second mounting guide member, coupled to the frame and provided with a first hanging groove portion and a second hanging groove portion, respectively, which are arranged so that the first hanging protrusion and the second hanging protrusion are inserted. As one example, the first mounting guide member and the second mounting guide member may be provided with a first hanging groove portion and a second hanging groove portion, respectively, which are arranged so that the collection container is coupled to the norma position of the cover part when the first hanging protrusion and the second hanging protrusion are inserted.

Furthermore, each of the first hanging groove portion and the second hanging groove portion may be provided with a downward bent portion as downwardly bent, and may be subjected to chamfering so that as the lower end of the downward bent portion goes downward, the width decreases.

In addition, when the handle part is moved downward, the first lever part and the second lever part may push up the first hanging protrusion and the second hanging protrusion, respectively, and insert the first hanging protrusion and the second hanging protrusion into the first hanging groove portion and the second hanging groove portion, respectively. As one example, when the handle part is moved downward, the first lever part and the second lever part may push up the first hanging protrusion and the second hanging protrusion, respectively, to be inserted into the first hanging groove portion and the second hanging groove portion, respectively.

As one example, the first lever part and the second lever part may be provided with a first guide protrusion and a second guide protrusion, respectively, having a shape protruding in an outside direction.

In addition, the first mounting guide member and the second mounting guide member may be provided with a first support and a second support, respectively, positioned at the lower portion of each of the first hanging groove portion and the second hanging groove portion and guiding movement of the first guide protrusion and the second guide protrusion of the first lever part and the second lever part. As one example, each of the first mounting guide member and the second mounting guide member may have a first support and a second support, positioned at the lower portion of each of the first hanging groove portion and the second hanging groove portion and having a shape elongated in a horizontal direction so that the first guide protrusion and the second guide protrusion of the first lever part and the second lever part move along the outer surface.

Each of the first hanging groove portion and the second hanging groove portion may have a groove portion depth equal to or deeper than a separated distance between the lower end of each of the first hanging groove portion and the second hanging groove portion and each of the first support and the second support.

The first mounting guide member and the second mounting guide member may comprise a first insertion guide part and a second insertion guide part, respectively, arranged to guide movement for coupling the cover part and the collection container.

The first insertion guide part and the second insertion guide part may each have a step structure extending downward from each of the first hanging groove portion and the second hanging groove portion, and bent toward the collection container.

Also, the collection container may be moved upward in a state of being in contact with the first insertion guide part and the second insertion guide part by pressurization of the first lever part and the second lever part. As one example, the collection container may be moved upward along the outer surface of the step structure of each of the first insertion guide part and the second insertion guide part by pressurization of the first lever part and the second lever part.

In addition, the separation part may comprise a cylindrical body having a shape in which the diameter gradually decreases downward, a cap part provided to cover the upper portion of the cylindrical body, and a connection port formed in the center of the cap part and arranged so that the suction pipe connected to the negative pressure pump is inserted.

Furthermore, the electrode tab scrap collection device related to one example of the present invention may comprise an inlet pipe arranged to communicate with the inflow port, and a connecting hose inserted and connected into the inlet pipe and arranged with a moving passage through which scraps are movable from the outside to the inlet pipe.

In the inlet pipe, an inner diameter size of the inlet pipe may be equal to or larger than an outer diameter of the connecting hose.

In addition, the electrode tab scrap collection device related to one example of the present invention may comprise a fixing member arranged to fix the connecting hose to the inlet pipe.

In order to achieve the above-described purpose, according to one example of the present invention, it provides a method of collecting electrode tab scraps generated in a process of manufacturing secondary batteries using a scrap collection device comprising a separation part, a cover part, a collection container, and a mounting lever, wherein the electrode tab scrap collection method comprises a scrap temporary storage step in which electrode tab scraps introduced to the inside of the separation part are moved to the collection container through a discharge port of the separation part, a collection container separation step in which the collection container is separated from the cover part by moving the mounting lever when the scraps discharged to the collection container are collected in a predetermined amount or more, an external discharge step in which the separated collection container is moved to the outside to discharge the internal scraps to the outside, and a collection container mounting step in which the emptied collection container is mounted on the cover part using the mounting lever.

### Advantageous Effects

As discussed above, the electrode tab scrap collection device and the electrode tab scrap collection method related to one example of the present invention have the following effects.

By comprising a mounting lever arranged so that a collection container is combined to or separated from a cover part, a worker can easily and quickly perform a separation and combination work of the cover part and the collection container. In addition, it is possible to improve electrode tab scrap collection efficiencies and productivity.

### Description of Drawings

Figure 1 is a partial cross-sectional diagram schematically showing an inner appearance of a general scrap collection device.
Figure 2 is a conceptual diagram conceptually showing components of a scrap collection device according to one example of the present invention.
Figure 3 is a front view schematically showing an appearance of a scrap collection device according to one example of the present invention.
Figure 4 is a partial cross-sectional diagram schematically showing an internal appearance of a scrap collection device according to one example of the present invention.
Figure 5 is a partial cross-sectional diagram schematically showing a partial appearance of a scrap collection device according to one example of the present invention.
Figure 6 is one side view schematically showing an appearance of a scrap collection device according to one example of the present invention.
Figure 7 is the other side view schematically showing an appearance of a scrap collection device according to one example of the present invention.
Figures 8 to 11 are partial schematic diagrams schematically showing appearances of some components of a scrap collection device according to one example of the present invention.
Figure 12 is a flowchart showing steps of a scrap collection method according to one example of the present invention.

### Mode for Invention

Hereinafter, an electrode tab scrap collection device and an electrode tab scrap collection method according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

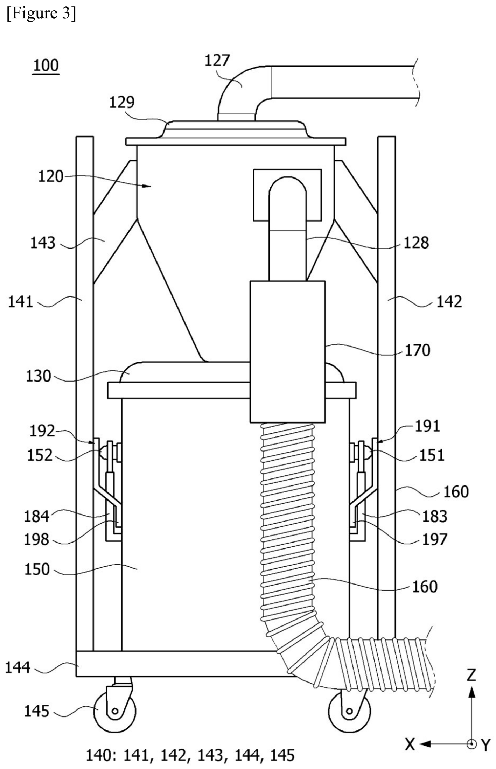

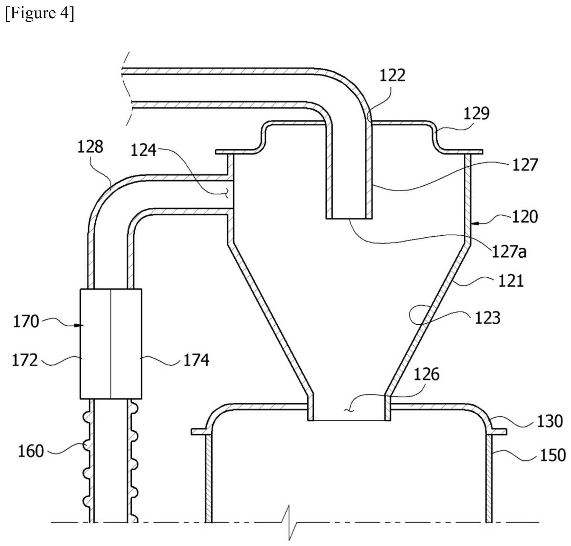

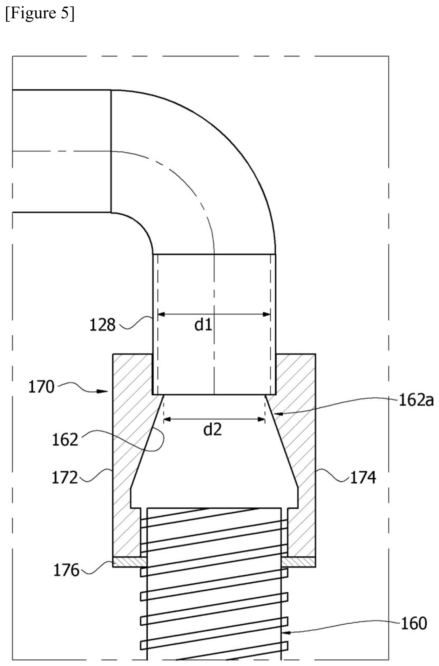

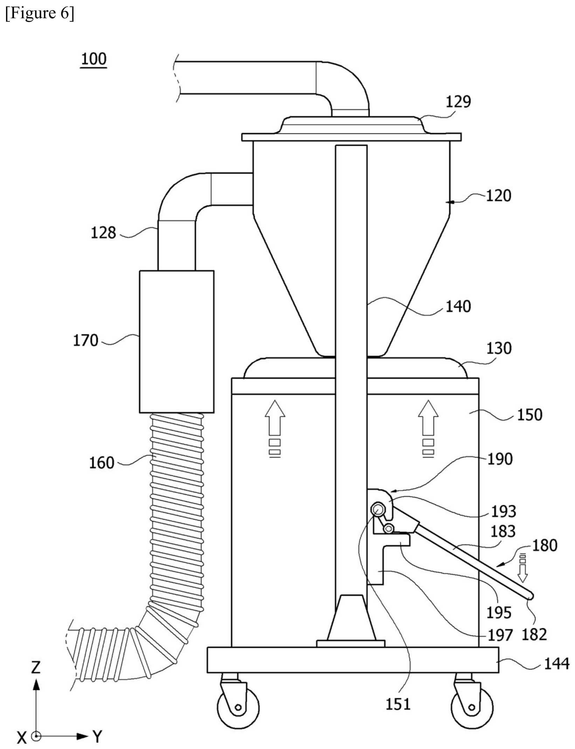

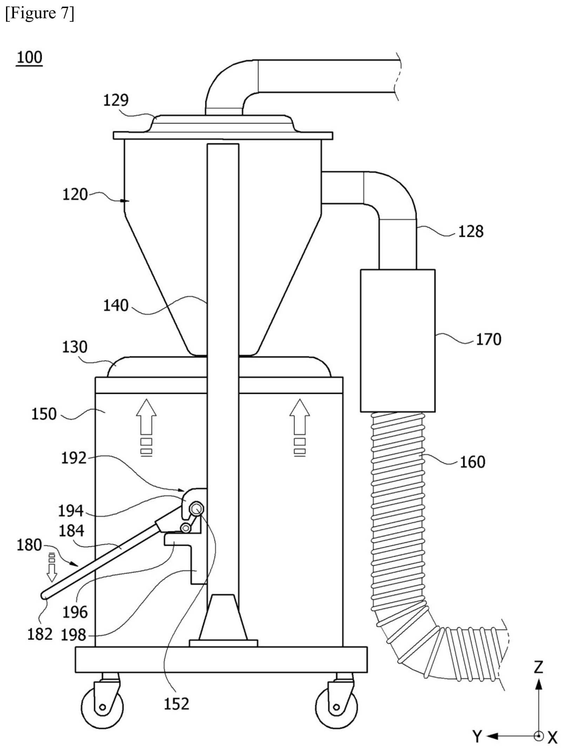

Figure 2 is a conceptual diagram conceptually showing components of a scrap collection device (100) according to one example of the present invention. Figure 3 is a front view schematically showing an appearance of a scrap collection device (100) according to one example of the present invention. Figure 4 is a partial cross-sectional diagram schematically showing an internal appearance of a scrap collection device (100) according to one example of the present invention. Figure 5 is a partial cross-sectional diagram schematically showing a partial appearance of a scrap collection device according to one example of the present invention. Figure 6 is one side view schematically showing an appearance of a scrap collection device according to one example of the present invention. Then, Figure 7 is the other side view schematically showing an appearance of a scrap collection device according to one example of the present invention.

Referring to Figures 2 to 7, a scrap collection device (100) according to one example of the present invention is a device for collecting scraps generated in a process of manufacturing electrode tabs.

As one example, the electrode tab scrap collection device (100) of the present invention may comprise a negative pressure pump (110). Here, the negative pressure pump (110) may be arranged to suck by generating a negative pressure. Specifically, the negative pressure pump (110) may suck and discharge air through a suction opening (not shown) and a discharge opening (not shown) installed inside the pump body.

Also, the electrode tab scrap collection device (100) of the present invention may comprise a separation part (120). The separation part (120) may be provided with a connection port (122) connected to the negative pressure pump (110). The separation part (120) may be provided with an inflow port (124) arranged so that electrode tab scraps are introduced from the outside. The separation part (120) may be provided with a discharge port (126) arranged so that the separated electrode tab scraps are discharged. In addition, a method of separating the introduced scraps of the separation part (120) is not limited to a specific method, and for example, a method of separating scraps by gravity, a separation method using the principle of rotating at different speeds by inertial force, a separation method using magnetic force, and the like may be used.

Furthermore, the separation part (120) may use a separation method using centrifugal force. To this end, the separation part (120) may have a cylindrical body (121). The separation part (120) may allow for electrode tab scraps rotationally moving by suction air of the suction pipe (127) inside the cylindrical body (121) to collide with the inner surface (123) of the cylindrical body (121). Then, the separation part (120) may be arranged so that the scraps move to the discharge port (126) by gravity.

Also, the cylindrical body (121) of the separation part (120) may have a shape in which the diameter gradually decreases in the downward direction. The cylindrical body (121) with such a shape is advantageous in inducing particles to descend to the cylindrical bottom by gravity while rotating along the cylindrical inner wall by receiving centrifugal force.

In addition, the separation part (120) may be provided with a cap part (129) arranged to cover the upper portion of the cylindrical body (121). The cap part (129) may be coupled with the upper portion of the cylindrical body (121). A gasket (not shown) may be provided between the cap part (129) and the cylindrical body (121) for sealing.

Furthermore, the separation part (120) may be provided with a connection port (122) connected to the negative pressure pump (110). The connection port (122) may be formed in the center of the cap part (129). The separation part (120) may be provided with an inflow port (124) arranged so that electrode tab scraps are introduced from the outside. The inflow port (124) may be formed in the lateral of the cylindrical body (121). The discharge port (126) may be formed in the lower portion of the cylindrical body (121).

In addition, the electrode tab scrap collection device (100) related to one example of the present invention may comprise a suction pipe (127). The suction pipe (127) may be connected to the negative pressure pump (110) and may be arranged to suck air from the suction port (127a). The suction pipe (127) may be arranged for a fluid to be movable. The suction pipe (127) may be inserted into the connection port (122) of the separation part (120). The terminal portion of the suction pipe (127) may be spaced apart from the discharge port (126) by a predetermined distance. For example, the degree of separation between the suction port (127a) and the discharge port (126) in the suction pipe (127) may be spaced apart by a distance in a range of 50% to 80% or so of the total height of the internal space of the separation part (120). Therefore, by such a constitution, the electrode tab scrap collection device of the present invention can prevent scraps from being caught between the suction pipe (127) and the discharge port (126) to clog the discharge passage.

Referring to Figures 2 to 5, the electrode tab scrap collection device (100) of the present invention may comprise a connecting hose (160). The connecting hose (160) may be inserted to the inside of the inlet pipe (128) to be connected. The connecting hose (160) may be arranged with a moving passage through which scraps are movable from the outside where scraps are generated to the inlet pipe (128). At this time, the scraps may be moved from the location where the scraps are generated to the inlet pipe (128) by the negative pressure generated by the negative pressure pump (110). The connecting hose (160) may be provided with a durable and flexible material. For example, the connecting hose (160) may be formed of polyethylene (PE), polyurethane (PU), rubber, and the like.

Also, the electrode tab scrap collection device (100) of the present invention may comprise an inlet pipe (128). The inlet pipe (128) may be connected to the separation part (120) to be in communication with the inflow port (124). The inlet pipe (128) may be arranged so that the connecting hose (160) is connected to the end of the pipe.

In addition, the inner diameter (d1) of the inlet pipe (128) may be larger than the length of the electrode tab scrap. Such an inlet pipe (128) can prevent scraps from being caught inside. For example, the inner diameter of the inlet pipe (128) may be larger than the length of the longest width portion of the electrode tab scrap.

Furthermore, in the connecting hose (160), one end may be connected to the scrap generation site (e.g., an electrode tab cutting device). Here, the scrap generation location means a location where electrode tab scraps are generated while shaping electrodes or electrode tabs. The connecting hose (160) may be arranged so that the other end is inserted into the pipe end of the inlet pipe (128). That is, the connecting hose (160) acts as a moving passage so that scraps can be moved from the scrap generation location to the inlet pipe (128) by the negative pressure of the negative pressure pump (110).

Also, as in Figure 5, the end of the connecting hose (160) may have a structure in which the inner diameter gradually decreases toward the terminal portion. The structure in which the inner diameter decreases can minimize the phenomenon of scrap jamming or scrap clogging at the connection portion between the inlet pipe (128) and the connecting hose (160). A nozzle (162) for being inserted to the inside of the inlet pipe (128) may be provided in the connecting hose (160) at its end. Scraps may be introduced from the scrap generation site to the inlet pipe (128) through the connecting hose (160). The inlet pipe (128) has an inner diameter (d1) of the pipe that is equal to or larger than the inner diameter (d2) of the connecting hose (160). That is, t the outer diameter (d2) of the end (162a) of the connecting hose (160) may be formed to be equal to or smaller than the inner diameter (d1) of the inlet pipe (128). That is, the present invention can minimize the phenomenon of scrap jamming or scrap clogging, as the step structure capable of causing interference with the scraps in the moving passage of the connection portion between the inlet pipe (128) and the connecting hose (160) is not formed.

In addition, the electrode tab scrap collection device (100) may comprise a fixing member (170) arranged to fix the connecting hose (160) to the inlet pipe (128). The fixing member (170) may be arranged to fix the end of the connecting hose (160) in a state where it is inserted into the inside of the inlet pipe (128).

Furthermore, the fixing member (170) may be arranged to pressurize and fix each outer surface of the end of the connecting hose (160) and the end of the inlet pipe (128). For example, the fixing member (170) may be arranged so that the inner surface may surround the outer surfaces of the connecting hose (160) and the inlet pipe (128).

Also, the fixing member (170) may be provided with a pressurization fixing member (176) at the bottom. The pressurization fixing member (176) may be arranged to pressurize and fix the connecting hose (160). For example, the pressurization fixing member (176) may have a ring shape. For example, the pressurization fixing member (176) may have a pressurization fixing protrusion provided on the inner periphery of the ring shape.

In addition, the electrode tab scrap collection device (100) of the present invention may comprise a collection container (150). The collection container (150) may be arranged to temporarily store scraps.

Furthermore, the electrode tab scrap collection device (100) of the present invention may comprise a cover part (130). The cover part (130) may be connected to the lower portion of the separation part (120). The cover part (130) may be connected to the discharge port (126). That is, the cover part (130) may have a centrally opened shape to be connected to the discharge port (126). The cover part (130) may be arranged to cover the upper portion of the collection container (150) to be described below. At this time, the cover part (130) may be provided with a gasket interposed at the joint portion of the cover part (130) and the collection container (150) so that the collection container (150) may be sealed.

The collection container (150) may be arranged to be combinable to or separable from the cover part (130). The collection container (150) may have, for example, a cylindrical shape with an open top and a closed bottom.

In addition, the electrode tab scrap collection device (100) of the present invention may comprise a mounting lever (180) arranged so that the collection container (150) is coupled to or separated from the cover (130). More specifically, the mounting lever (180) may be arranged to be connectable to the lateral of the collection container (150). The mounting lever (180) is to be held and moved by a worker's hand, and the mounting lever (180) may be arranged to stably connect the collection container (150) and the cover part (130), or to easily separate the collection container (150) and the cover part (130). That is, the collection container (150) may also be mounted to the cover part (130) through the mounting lever (180), and the collection container (150) may be separated from the cover part (130), and the separated collection container (150) may be removed to the outside of the device (100).

Therefore, the electrode tab scrap collection device (100) of the present invention comprises a mounting lever (180) arranged so that the collection container (150) is coupled to or separated from the cover part (130), where the worker can easily and quickly perform the separation and combination work of the cover part (130) and the collection container (150) through the mounting lever (180), and accordingly, has an effect capable of improving the scrap collection work efficiency and productivity.

Referring to Figures 6 and 7, the mounting lever (180) may comprise a handle part (182). As one example, the handle part (182) may have a bar shape elongated in both directions. The mounting lever (180) may be arranged so that a worker can hold the handle part (182) by hand and move it up and down. For example, the downward direction, which is an extension direction of the suction pipe (127) in Figure 4, may be parallel to the Z-axis direction. For example, the insertion direction in which the inlet pipe (128) of Figure 6 is inserted into the inflow port (124) may be parallel to the Y-axis direction. Then, the X-axis direction of Figure 6 may be a direction perpendicular to the plane formed by the Z-axis and the Y-axis.

Also, the mounting lever (180) may comprise a first lever part (183) and a second lever part (184). Each of the first lever part (183) and the second lever part (184) may have a bar shape elongated from each of both ends of the handle part (182) toward the collection container (150). That is, the first lever part (183) and the second lever part (184) have a shape elongated in the Y-axis direction.

In addition, the collection container (150) may be provided with a first hanging protrusion (151) and a second hanging protrusion (152). The first hanging protrusion (151) and the second hanging protrusion (152) may be arranged to protrude in both directions from both laterals to be combinable with the ends of the first lever part (183) and the second lever part (184), respectively. For example, the collection container (150) may be provided with the first hanging protrusion (151) and the second hanging protrusion (152), protruding in the outside direction on both sides, respectively, in the X-axis direction. The ends of the first hanging protrusion (151) and the second hanging protrusion (152) in the protruding direction may be provided with a cylindrical head having a larger diameter than that of the extended body at the ends.

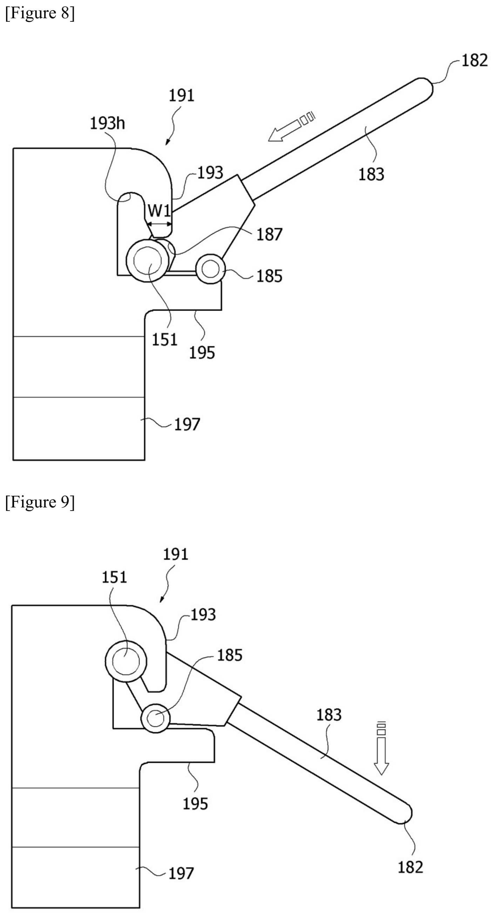

Figures 8 to 11 are partial schematic diagrams schematically showing appearances of some components of a scrap collection device (100) according to one example of the present invention.

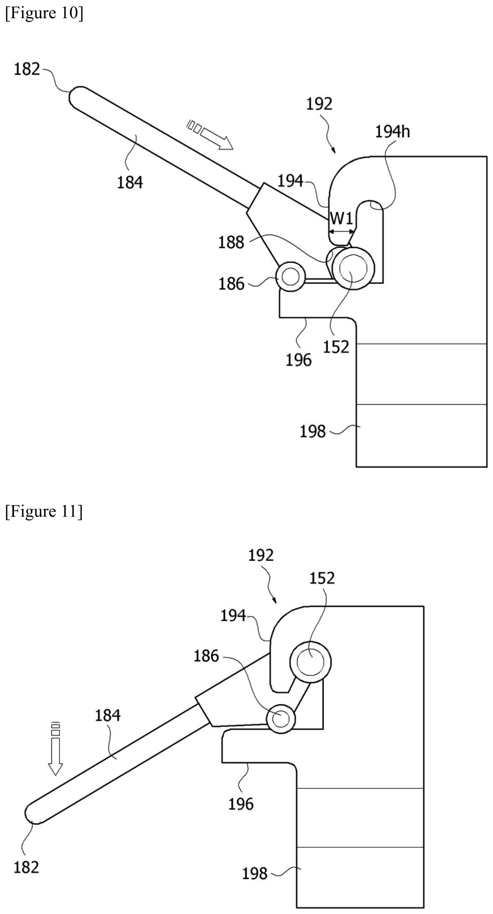

Referring to Figures 3 to 11, the first lever part (183) may be provided with a first insertion groove (187) at an end extending from the handle part (182) (see Figure 8). In addition, the second lever part (184) may be provided with a second insertion groove (188) at an end extending from the handle part (182) (see Figure 10).

Also, the first insertion groove (187) may be arranged so that the first hanging protrusion (151) is inserted. The second insertion groove (188) may be arranged so that the second hanging protrusion (152) is inserted. The first insertion groove (187) and the second insertion groove (188) may each be an arc-shaped groove. Such a first insertion groove (187) is arranged so that the first hanging protrusion (151) is insertable or separable as the worker moves the handle part (182). In addition, the second insertion groove (188) is arranged so that the second hanging protrusion (152) is insertable or separable as the worker moves the handle part (182).

As one example, when the handle part (182) is moved downward, the first hanging protrusion (151) inserted into the first insertion groove (187) of the first lever part (183) may be arranged to be inserted and moved into the first hanging groove portion (193). Likewise, when the handle part (182) is moved downward, the second hanging protrusion (152) inserted into the second insertion groove (188) of the second lever part (184) may be arranged to be inserted and moved into the second hanging groove portion (194).

Also, as in Figure 3, the electrode tab scrap collection device (100) may comprise a frame (140) arranged to fix the separation part (120). For example, the frame (140) may be provided with column parts (141, 142) extending in the vertical direction on both sides centered on the separation part (120). A connection part (143) arranged to be connected to the separation part (120) may be provided. A support part (144) may be formed at the lower portion of the frame (140). The support part (144) may be provided with a moving wheel (145) at the bottom.

In addition, the electrode tab scrap collection device (100) may comprise a first mounting guide member (191) and a second mounting guide member (192). The first mounting guide member (191) and the second mounting guide member (192) may be arranged to be coupled to the frame (140). The first mounting guide member (191) and the second mounting guide member (192) may be provided with a first hanging groove portion (193) and a second hanging groove portion (194), respectively. The first hanging groove portion (193) and the second hanging groove portion (194) may be arranged such that a first hanging protrusion (151) and a second hanging protrusion (152) are inserted therein, respectively. Referring to Figures 6 and 7, the first hanging groove portion (193) may be arranged so that the collection container (150) is coupled at the normal position (joining position) of the cover part (130) when the first hanging protrusion (151) is inserted. Each second hanging groove portion (194) may be arranged so that the collection container (150) is coupled at the normal position of the cover part when the second hanging protrusion (152) is inserted.

Furthermore, the first hanging groove portion (193) and the second hanging groove portion (194) may each be provided with a downward bent portion (side wall lower end) as downwardly bent. The first hanging groove portion (193) and the second hanging groove portion (194) may each be subjected to chamfering so that as the lower end of the downward bent portion goes downward, the width (w1) decreases.

Also, when the handle par (182) is moved downward so that the collection container (150) is coupled to the normal position (joining position) of the cover part (130), the first lever part (183) may be arranged so that the first hanging protrusion (151) is pushed up and inserted into the first hanging groove portion (193). When the handle part (182) is moved downward, the second lever part (184) may be arranged so that the second hanging protrusion (152) is pushed up and inserted into each hanging groove portion (194).

On the contrary, when the handle part (182) is moved upward, the collection container (150) may be lowered, and the collection container (150) may be separated from the cover part (130).

Also, the first lever part (183) may be provided with a first guide protrusion (185) having a shape protruding in the outside direction at the end. In addition, the second lever part (184) may be provided with a second guide protrusion (186) having a shape protruding in the outside direction at the end.

In addition, the first lever part (183) may be provided with a first guide protrusion (185). The second lever part (184) may be provided with a second guide protrusion (186). The first guide protrusion (185) may be provided at an end in the extension direction of the first lever part (183). The second guide protrusion (186) may be provided at an end in the extension direction of the second lever part (184). The first guide protrusion (185) and the second guide protrusion (186) may have a shape protruding in the outside direction (both directions of the X-axis). The first guide protrusion (185) may be arranged to move along the outer surface of the first support (195) according to the movement of the handle part (182). The second guide protrusion (186) may be arranged to move along the outer surface of the second support (196) according to the movement of the handle part (182). The first guide protrusion (185) and the second guide protrusion (186) may be provided with a cylindrical head having a diameter larger than that of the body extended at the end in the protruding direction.

Furthermore, the depth of the groove (193h) in the first hanging groove portion (193) may be set to be the same as the separated distance between the lower end of the first hanging groove portion (193) and the first support (195). The depth of the groove (194h) in the second hanging groove portion (194) may be set to be the same as the separated distance between the lower end of the second hanging groove portion (194) and the second support (196).

Alternatively, the depth of the groove (193h) in the first hanging groove portion (193) may be set to be deeper than the separated distance between the lower end of the first hanging groove portion (193) and the first support (195). The depth of the groove (194h) in the second hanging groove portion (194) may be set to be deeper than the separated distance between the lower end of the second hanging groove portion (194) and the second support (196).

Therefore, the present invention can maintain a stable coupled state of the collection container (150), because the first hanging protrusion (151) and the second hanging protrusion (152) inserted into the first hanging groove portion (193) and the second hanging groove portion (194), respectively, prevent from being easily separated from the first hanging groove portion (193) and the second hanging groove portion (194).

Referring to Figures 3, 8, and 10, the first mounting guide member (191) and the second mounting guide member (192) may comprise a first insertion guide part (197) and a second insertion guide part (198), respectively. The first insertion guide part (197) and the second insertion guide part (198) may each be arranged to guide the movement of the collection container (150) for combination of the cover part (130) and the collection container (150).

Specifically, the first insertion guide part (197) and the second insertion guide part (198) may each have a step structure. The step structure of the first insertion guide part (197) may have a shape that extends downward from the first hanging groove portion (193). The step structure of the second insertion guide part (198) may have a shape extending downward from the second hanging groove portion (194). At this time, the step structure may have a structure bent to protrude toward the collection container (150).

In addition, the collection container (150) may be arranged to move upward in a contact state along the outer surface of the step structure of each of the first insertion guide part (197) and the second insertion guide part (198) by pressurization of the first lever part (183) and the second lever part (184).

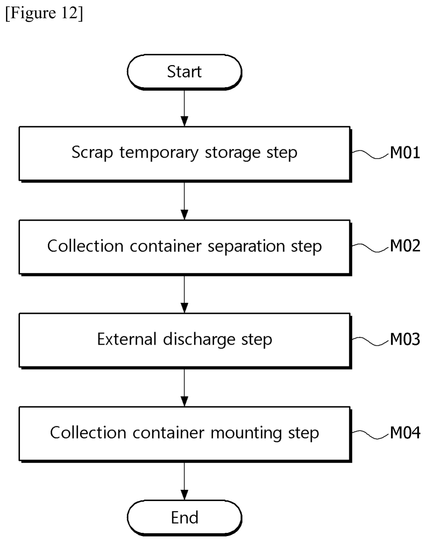

Figure 12 is a flow chart showing steps of a scrap collection method according to one example of the present invention.

Referring to Figure 12 together with Figures 2 to 11, the present application provides a scrap collection method according to one example of the present invention. The scrap collection method of the present invention is a method of collecting electrode tab scraps generated in a process of manufacturing secondary batteries. The scrap collection method of the present invention may use a scrap collection device (100) comprising a separation part (120), a cover part (130), a collection container (150), and a mounting lever (180).

Also, the scrap collection method of the present invention comprises a scrap temporary storage step (M01). In the scrap temporary storage step (MO1), electrode tab scraps introduced to the inside of the separation part (120) may be moved to the collection container (150) through a discharge port (126) of the separation part (120).

In addition, the scrap collection method of the present invention comprises a collection container separation step (M02). The collection container separation step (M02) may be a step of separating the collection container (150) from the cover part (130) by moving the mounting lever (180) when the scraps discharged to the collection container (150) are collected in a predetermined amount or more.

Furthermore, the scrap collection method of the present invention comprises an external discharge step (M03). The external discharge step (M03) may move the separated collection container (150) to the outside to discharge the internal scraps to the outside.

In addition, the scrap collection method of the present invention comprises a collection container mounting step (M04). The collection container mounting step (M04) is a step of mounting the emptied collection container (150) to the cover part (130) using the mounting lever (180).

Therefore, the scrap collection method of the present invention can allow for the collection container (150) to be mounted on or separated from the cover part (130) by using the scrap collection device (100) comprising the mounting lever (180), where the worker can easily and quickly perform the separation and combination work of the cover part (130) and the collection container (150), and has an effect capable of improving the work efficiency of the scrap collection device, and productivity.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the electrode tab scrap collection device and the electrode tab scrap collection method related to one example of the present invention, the worker can easily and quickly perform the separation and combination work of the cover part and the collection container.

## Claims

1. A device for collecting scraps generated in a process of manufacturing electrode tabs, wherein the electrode tab scrap collection device is **characterized by** comprising:
a negative pressure pump arranged to suck by generating a negative pressure;
a separation part including an inflow port arranged so that the scraps are introduced from the outside, and a discharge port arranged so that the introduced scraps are discharged;
a suction pipe connected to the negative pressure pump, having a suction port arranged to suck air, and inserted into the separation part;
a cover part connected to the lower portion of the separation part and being in communication with the discharge port;
a collection container arranged to store the scraps and arranged to be combinable to or separable from the cover part; and
a mounting lever arranged so that the collection container is combined to or separated from the cover part.

2. The electrode tab scrap collection device according to claim 1, **characterized in that**
the mounting lever comprises a handle part having an elongated bar shape; and
a first lever part and a second lever part elongated in a bar shape from each of both ends of the handle part toward the collection container.

3. The electrode tab scrap collection device according to claim 2, **characterized in that**
the collection container has a first hanging protrusion and a second hanging protrusion, arranged to protrude in both directions from both laterals, respectively, so that the protrusions are combinable to the first lever part and the second lever part, respectively.

4. The electrode tab scrap collection device according to claim 3, **characterized in that**
the first lever part and the second lever part have a first insertion groove and a second insertion groove, respectively, arranged so that each of the first hanging protrusion and the second hanging protrusion is inserted therein.

5. The electrode tab scrap collection device according to claim 3, **characterized by** comprising:
a frame arranged to fix the separation part; and
a first mounting guide member and a second mounting guide member, coupled to the frame and provided with a first hanging groove portion and a second hanging groove portion, respectively, which are arranged so that the first hanging protrusion and the second hanging protrusion are inserted.

6. The electrode tab scrap collection device according to claim 5, **characterized in that**
when the handle part is moved downward, the first lever part and the second lever part push up the first hanging protrusion and the second hanging protrusion, respectively, and insert the first hanging protrusion and the second hanging protrusion into the first hanging groove portion and the second hanging groove portion, respectively.

7. The electrode tab scrap collection device according to claim 5, **characterized in that**
the first lever part and the second lever part have
a first guide protrusion and a second guide protrusion, respectively, having a shape protruding in an outside direction.

8. The electrode tab scrap collection device according to claim 7, **characterized in that**
the first mounting guide member and the second mounting guide member are provided with
a first support and a second support, respectively, positioned at the lower portion of each of the first hanging groove portion and the second hanging groove portion and guiding movement of the first guide protrusion and the second guide protrusion of the first lever part and the second lever part.

9. The electrode tab scrap collection device according to claim 5, **characterized in that**
the first mounting guide member and the second mounting guide member comprise
a first insertion guide part and a second insertion guide part, respectively, arranged to guide movement for coupling the cover part and the collection container.

10. The electrode tab scrap collection device according to claim 9, **characterized in that**
the first insertion guide part and the second insertion guide part each have
a step structure extending downward from each of the first hanging groove portion and the second hanging groove portion, and bent toward the collection container.

11. The electrode tab scrap collection device according to claim 10, **characterized in that**
the collection container is moved upward in a state of being in contact with the first insertion guide part and the second insertion guide part by pressurization of the first lever part and the second lever part.

12. The electrode tab scrap collection device according to claim 11, **characterized in that**
the separation part comprises:
a cylindrical body having a shape in which the diameter gradually decreases downward;
a cap part provided to cover the upper portion of the cylindrical body; and
a connection port formed in the center of the cap part and arranged so that the suction pipe connected to the negative pressure pump is inserted, and
the discharge port is formed in the lower portion of the cylindrical body.

13. The electrode tab scrap collection device according to claim 12, **characterized by** further comprising:
an inlet pipe arranged to communicate with the inflow port; and
a connecting hose inserted and connected into the inlet pipe and arranged with a moving passage through which scraps are movable from the outside to the inlet pipe.

14. The electrode tab scrap collection device according to claim 13, **characterized in that**
in the inlet pipe, an inner diameter size of the inlet pipe is equal to or larger than an outer diameter of the connecting hose.

15. The electrode tab scrap collection device according to claim 13, **characterized by** further comprising:
a fixing member arranged to fix the connecting hose to the inlet pipe.
